Europäisches Patentamt

European Patent Office

Office européen des brevets

(19)

(11) Publication number: **0 020 169**
**B1**

(12) **EUROPEAN PATENT SPECIFICATION**

(45) Date of publication of patent specification: **15.02.84**

(51) Int. Cl.³: **B 41 J 29/00, G 06 F 1/00**

(21) Application number: **80301826.6**

(22) Date of filing: **02.06.80**

(54) **Cooling system for a line printer.**

(30) Priority: **01.06.79 JP 69085/79**
**01.06.79 JP 69086/79**
**01.06.79 JP 74955/79**
**01.06.79 JP 74960/79**

(43) Date of publication of application:
**10.12.80 Bulletin 80/25**

(45) Publication of the grant of the patent:
**15.02.84 Bulletin 84/7**

(84) Designated Contracting States:
**DE FR GB IT**

(56) References cited:
**FR - A - 1 242 626**
**US - A - 3 308 919**
**US - A - 3 962 608**
**US - A - 4 044 668**

(73) Proprietor: **NEC CORPORATION**
**33-1, Shiba 5-chome, Minato-ku**
**Tokyo 108 (JP)**

(72) Inventor: **Kumagai, Ikuo**
**c/o Nippon Electric Co., Ltd. 33-1 Shiba Gochome**
**Minato-ku Tokyo 108 (JP)**
Inventor: **Koyanagi, Yukiaki**
**c/o Nippon Electric Co., Ltd. 33-1 Shiba Gochome**
**Minato-ku Tokyo 108 (JP)**
Inventor: **Hidaka, Hiroshi**
**c/o Nippon Electric Co., Ltd. 33-1 Shiba Gochome**
**Minato-ku Tokyo 108 (JP)**

(74) Representative: **Orchard, Oliver John**
**JOHN ORCHARD & CO. Staple Inn Buildings**
**North High Holborn**
**London WC1V 7PZ (GB)**

Courier Press, Leamington Spa, England.

Cooling System for a Line Printer

This invention relates generally to high speed impact printers and more particularly to an improved cooling system for use in a high speed line printer.

A high speed line printer, as disclosed in the U.S. Patent No. 3,845,711 entitled "BELT PRINTER", comprises a flexible band assembly for moving type characters along a row of individually actuatable hammers. The band is supported on pulleys and carries on its outer surface a plurality of parallel elongated slugs extending across the width of the band. Each slug has a type character formed on its end face which can be impacted by an actuating hammer as it moves past a slug. When the hammers are actuated by respective hammer-actuators, the actuators become heated.

In order to cool the heated actuators, a previously proposed printer disclosed in U.S. Patent 3,308,919 comprised a ventilating fan arranged to cause fresh air to flow into the printer unit from the outside, a ventilating channel arranged at the rear of the hammer mechanism for directing the fresh air to the hammer actuators, and a ventilating duct arranged between the ventilating fan and the ventilating channel for passing the fresh air from the ventilating fan to the ventilating channel. However, in this arrangement, owing to attenuation, the ventilating fan requires a comparatively high blast pressure in order to achieve a sufficient cooling effect. Furthermore, it is difficult to cool every hammer actuator equally with the lowest possible blast pressure. Additionally, since the ventilating channel provides the hammer actuators with upwardly moving fresh air, heated air is ejected from an outlet positioned on the upper side of the printer unit. Therefore, in spite of providing soundproofing pads in the printer unit, the heated air accompanied with noises passes out of the upper positioned outlet, and soundproofing is difficult to obtain.

Accordingly, it is an object of the present invention to provide a line printer having an improved cooling arrangement with a minimum of noise emission.

The features and advantages of this invention will be better understood from the following detailed description of preferred embodiments of this invention taken in conjunction with the accompanying drawings, wherein:

Fig. 1 is a perspective view of a first embodiment of this invention;

Fig. 2 is a plan view of the first embodiment shown in Fig. 1;

Fig. 3 is a side view of the first embodiment shown in Fig. 1;

Fig. 4 is a side view of a part of the first embodiment shown in Fig. 1;

Fig. 5 is a perspective view of a cross-flow fan used in the first embodiment shown in Fig. 1;

Fig. 6 is a side view of a paper ejector in the first embodiment shown in Fig. 1;

Fig. 7 is a perspective view of a second embodiment of this invention;

Fig. 8 is a side view of the second embodiment shown in Fig. 7;

Fig. 9 is a perspective view of a third embodiment of this invention; and

Fig. 10 is a perspective view for illustrating airflow paths in the third embodiment shown in Fig. 9.

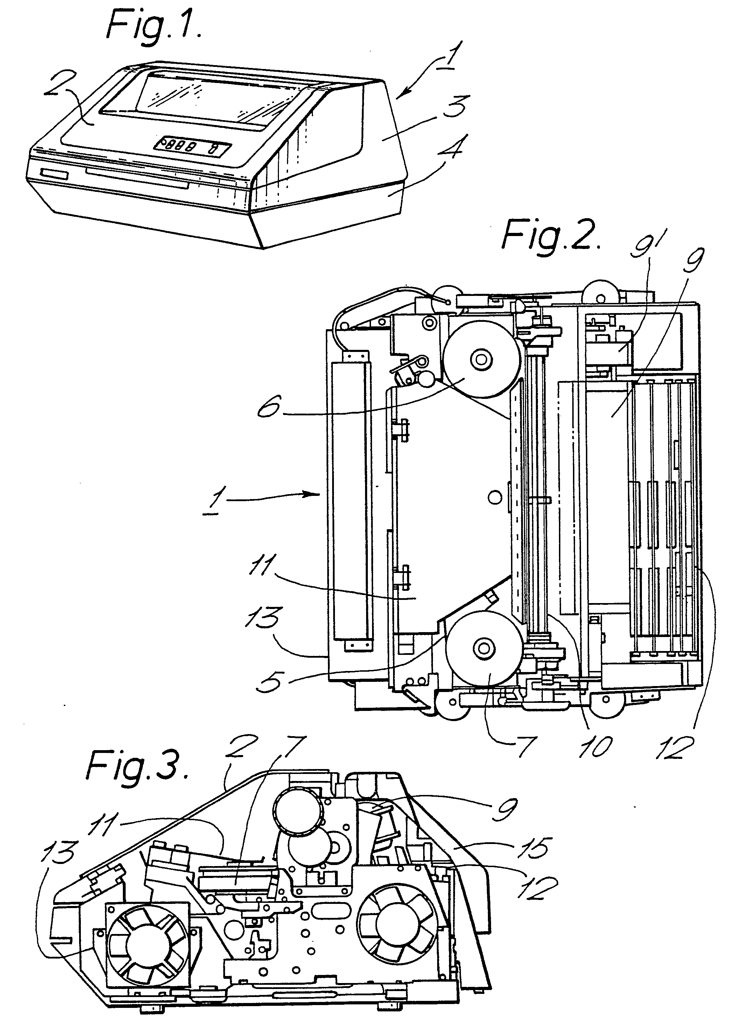

Referring to Fig. 1, a line printer 1 according to the first embodiment of this invention comprises a top cover 2, middle covers 3, and a base cover 4.

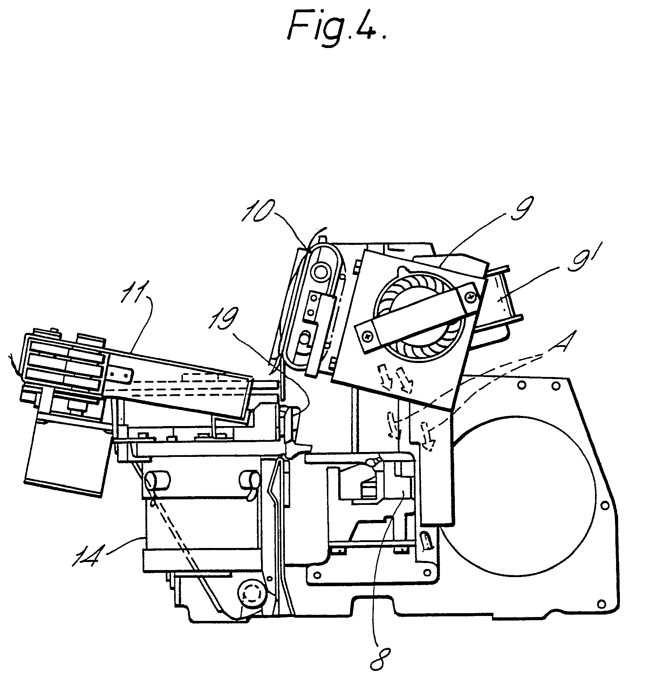

Referring to Figs. 2, 3 and 4, the line printer 1 comprises a driving pulley 6 driven by a motor 14, a freely rotatable pulley 7, and a flexible character-band 5 supported on the pulleys 6 and 7. The band 5 carries on its outer surface a plurality of parallel elongated slugs each having a type character. A plurality of print hammers 19 (Fig. 4) and hammer actuators 8 are provided behind and along the type-character band 5. A cross-flow fan 9 is provided above the level of a hammer actuator 8 (Fig. 4) for cooling the heated hammer actuators 8. The cross-flow fan 9 is driven by a motor 9'.

The line printer 1 further comprises a paper feeding mechanism including tractor chains 10 for pulling edge perforated paper past the impact faces of the hammers 19. An inked ribbon cassette 11 for housing an inked ribbon is provided above the type-character band 5. The inked ribbon is pulled out from one opening of the cassette 11 and passed between the type-character band 5 and the hammers 19 and then entered into the other opening of the cassette 11. A control unit 12 is provided behind the hammer actuators 8 for controlling the operation of the line printer 1. An electric source unit 13 is provided below the type-character band 5 and the cassette 11.

Each of the hammer actuators 8 is composed of an actuator lever, an armature, a core and a coil and the core and coil are heated when the actuator 8 is operated. The heated actuators 8 are cooled by the air flow from the cross-flow fan 9.

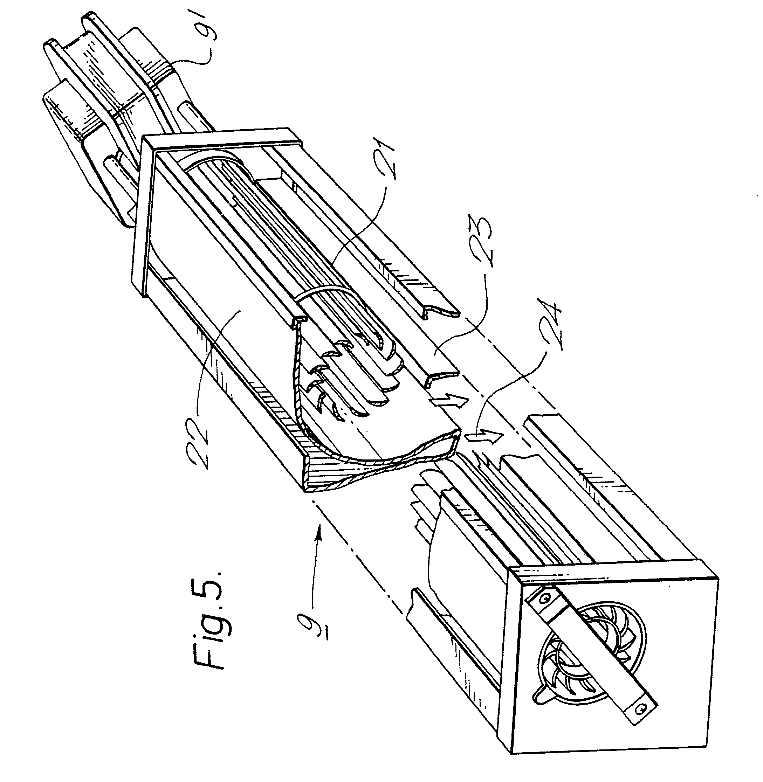

As shown in Fig. 5, the cross-flow fan 9 comprises a plurality of fan blades 21, a guide wall 22 and a stabilizer 23 and is driven by the motor 9'. When the cross-flow fan 9 rotates, the cooling air is drawn in from a side opening and blown downwards from a gap between the guide wall 22 and the stabilizer 23 in a direction A depicted by arrows in Fig. 4. The air which is blown downwards is directed to the heated actuators 8 whereupon it becomes a heated air flow. The heated air flows from an opening beneath the line printer 1.

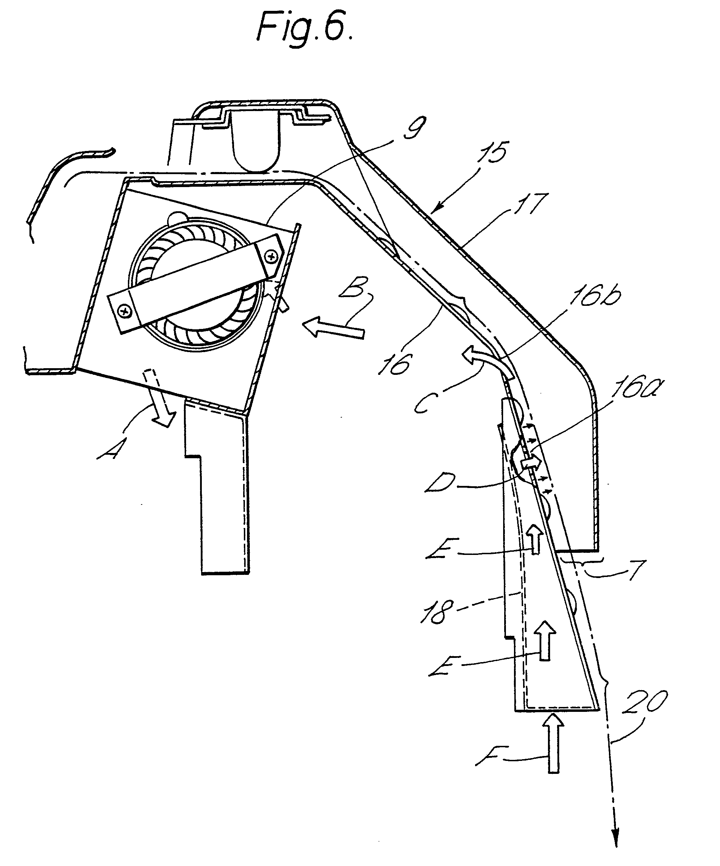

Referring to Fig. 6, a paper ejector 15 comprises a paper guide plate 16 having a plurality of holes 16a therethrough, and a cover plate 17. An air duct 18 is provided behind the perforated guide plate 16. A plurality of projections are provided on the plate 16 to prevent the adherence of paper indicated at 20 to the plate 5. The cooling air flows through the air duct 18 and the holes 16a to the cross-flow fan 9 as depicted by arrows F, E, D, C and B to make eddies. This makes it possible to remove the paper 20 from the guide plate 16, and to reduce the occurrence of static electricity on the paper 20, resulting in the smooth feeding of the paper 20.

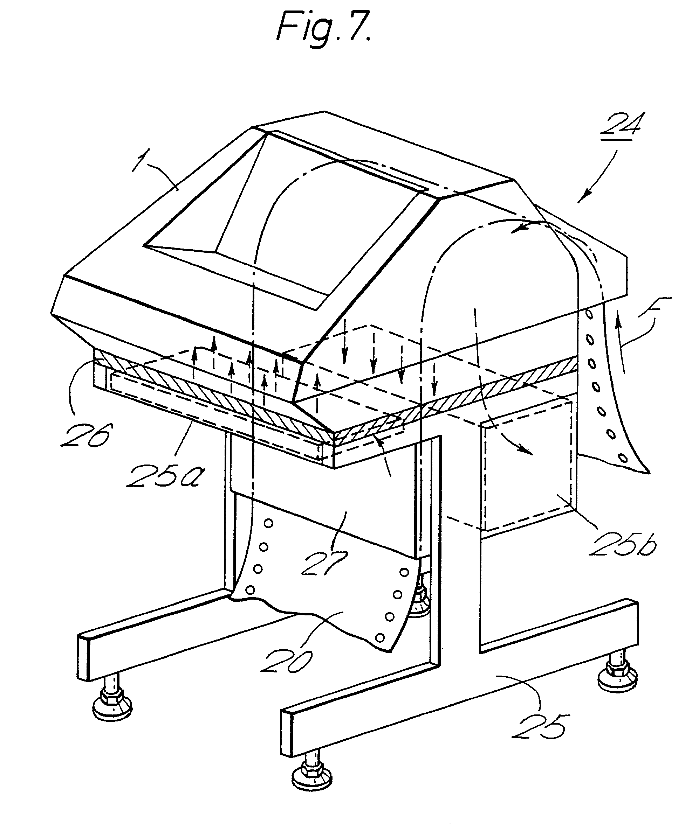

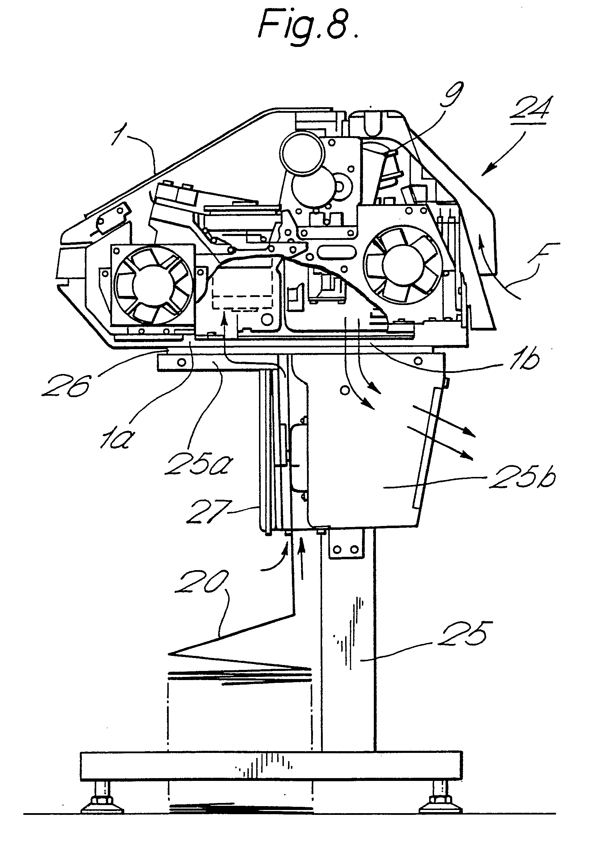

Referring to Fig. 7 and 8, the second embodiment 24 comprises the line printer 1, a printer table 25 supporting the printer 1, and a cushion 26 provided between the printer 1 and the table 25. The table 25 comprises muffler chambers 25a and 25b, and a paper guide 27 from which the paper 20 is fed to the printer 1 through the lower opening 1a. The cooling air is also fed through the guide 27 and the muffler chamber 25a to the printer 1. The heated air is passed through the lower opening 1b and the muffler chamber 25b and ventilated to the outside. The muffler chambers 25a and 25b make it possible to provide a soundproofing effect.

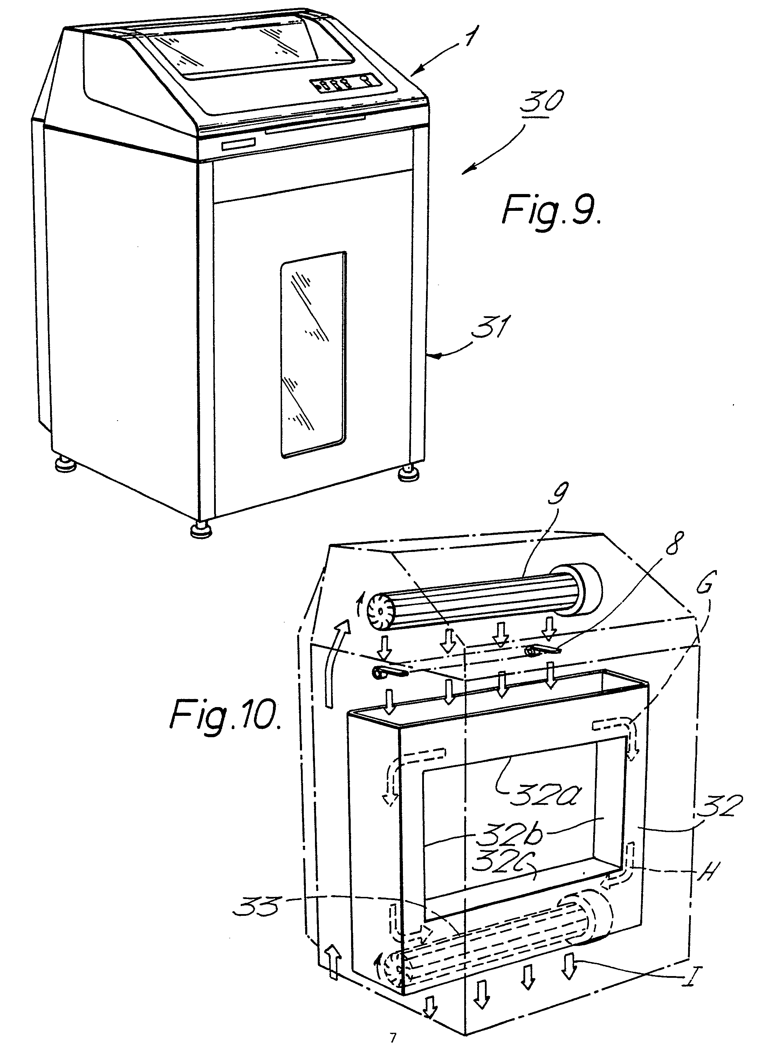

Referring to Figs. 9 and 10, the third embodiment 30 comprises the line printer 1 and a sound arrester 31 on which the printer 1 is positioned. The sound arrester 31 includes an air duct 32 and an additional cross-flow fan 33 provided at the bottom of the air duct 32 and identical to the fan 9. A sound absorber is provided on the inner surface of the air duct 32.

The air heated by the actuators 8 is passed via an upper horizontal path 32a to vertical side paths 32b in the air duct 32 as depicted by arrows G. The air passed through the side paths 32b is fed from a lower path 32C to the cross-flow fan 33 as depicted by arrows H. The cross-flow fan 33 ventilates the heated air from the lower opening of the sound arrester 31 as depicted by arrows I.

In the third embodiment, the air duct 32 constitutes a muffler and a rectangular vent. This raises the sound proof effect. Further, the sound absorber provided in the air duct 32 can reduce noises.

## Claims

1. A line printer having a plurality of individually actuatable hammers (19), for use in impacting a type character, and a hammer actuator arrangement including a plurality of hammer actuators (8) for individually actuating said hammers (19), and a flexible character band (5) for carrying a plurality of the type characters, characterized in that a cross-flow fan (9) is placed above said hammer actuator arrangement (8) such that the longitudinal axis of said cross-flow fan (9) is substantially parallel to the longitudinal axis of said character band (5) and said cross-flow fan (9), extends longitudinally over the entire length of said hammer actuator arrangement (8), cooling air from said cross-flow fan (9) being directed to said hammer actuator arrangement (8) from its upper side down to the bottom of said printer.

2. A line printer as claimed in claim 1, characterised in that there is provided a paper guide plate (16) having a plurality of holes (16a) therethrough, wherein the paper guide plate (16) is arranged to guide paper leaving the printer and incoming cooling air for the air moving means (9) passes through the holes (16a) in order to make easier the removal of the paper from the guide plate (16).

3. A line printer as claimed in any one of the preceding claims, characterised in that there is provided a sound arrester (31) on which the printer is mounted, the sound arrester (31) incorporating a second air moving means (33) arranged to vent heated air from a lower opening of the sound arrester (31).

## Revendications

1. Imprimante ligne par ligne comportant une pluralité de marteaux pouvant être actionnés individuellement (19), servant à frapper un caractère, et un agencement d'organes d'actionnement de marteaux comprenant une pluralité d'organes d'actionnement (8) pour actionner individuellement les marteaux (19), et une bande flexible (5) supportant une pluralité de caractères, caractérisée en ce qu'un ventilateur à flux transversal (9) est placé audessus de l'agencement (8) des organes d'actionnement de marteaux d'une manière telle que l'axe longitudinal du ventilateur (9) est sensiblement parallèle à l'axe longitudinal de la bande à caractères (5) et le ventilateur (9) s'étend longitudinal sur toute la longueur de l'agencement (8) d'organes d'actionnement de marteaux, de l'air de refroidissement provenant du ventilateur (9) étant dirigé vers l'agencement (8) d'organes d'actionnement de marteaux à partir de son côté supérieur, dans la direction du bas, jusqu'au fond de l'imprimante.

2. Imprimante ligne par ligne selon la revendication 1, caractérisée en ce qu'il est prévu une plaque de guidage de papier (16) dans laquelle est pratiquée une pluralité de trous (16a), où la plaque (16) est disposée de manière à guider le papier quittant l'imprimante, et l'air entrant de refroidissement destiné au moyen de déplacement d'air (9) traverse les trous (16a) de manière à faciliter l'enlèvement du papier de la plaque de guidage (16).

3. Imprimante ligne par ligne selon l'une quelconque des revendications précédentes, caractérisée en ce qu'on a prévu une barrière de son (31) sur laquelle l'imprimante est montée, la barrière (31) incorporant un second moyen de déplacement d'air (33) qui est disposé de

**0 020 169**

manière à ventiler l'air chauffé par une ouverture inférieure de la barrière (31).

**Patentansprüche**

1. Zeilendrucker mit mehreren einzeln betätigbaren Hämmern (19) zum Anschlagen eines Typenzeichens, einer Hammerbetätigungseinrichtung mit mehreren Hammerbetätigern (8) zum einzelnen Betätigen der Hämmer (19) und mit einem flexiblen Zeichenband (5), das mehrere Typenzeichen trägt, dadurch gekennzeichnet, daß oberhalb der Hammerbetätigungseinrichtung (8) ein Tangentialgebläse (9) derart angeordnet ist, daß dessen Längsachse im wesentlichen parallel zur Längsachse des Zeichenbandes (5) ist und daß sich das Tangentialgebläse (9) in Längsrichtung über die gesamte Länge der Hammerbetätigungseinrichtung (8) erstreckt, wobei vom Tangentialgebläse (9) Kühlluft zur Hammerbetätigungseinrichtung (8) von seiner Oberseite nach unten zum unteren Ende des Druckers gerichtet wird.

2. Zeilendrucker nach Anspruch 1, dadurch gekennzeichnet, daß eine Papierführungsplatte (16) mit mehreren durchgehenden Bohrungen (16a) vorgesehen ist, wobei die Papierführungsplatte (16) zum Führen des den Drucker verlassenden Papiers dient und wobei ankommende Kühlluft für die Luftbewegungseinrichtung (9) durch die Bohrungen (16a) strömt, um das Lösen des Papiers von der Führungsplatte (16) zu erleichtern.

3. Zeilendrucker nach einem der vorstehenden Ansprüche, gekennzeichnet durch einen Geräuschfänger (31), auf dem der Drucker befestigt ist, wobei der Geräuschfänger (31) eine zweite Luftbewegungseinrichtung (33) aufweist, um erwärmte Luft aus einer unteren Öffnung des Geräuschfängers (31) abzuleiten.

Fig.1.

Fig.2.

Fig.3.

# Fig.4.

Fig.5.

0 020 169

## Fig.6.

# Fig.7.

# Fig.8.

O 020 169

Fig.9.

Fig.10.